# EUROPEAN PATENT SPECIFICATION

(11) **EP 2 831 663 B1**
(45) Date of publication and mention of the grant of the patent: **16.03.2016**
(21) Application number: 13723213.8
(22) Date of filing: 19.03.2013
(51) Int. Cl.: G02C 5/00

(54) **METHOD FOR MANUFACTURING SPECTACLES FRAMES MADE OF MULTILAYER WOOD AND CARBON FIBRE**
VERFAHREN ZUR HERSTELLUNG VON BRILLENEINFASSUNGEN AUS MEHRSCHICHTIGEN HOLZ- UND KOHLENSTOFFFASERN
PROCÉDÉ DE FABRICATION DE MONTURES DE LUNETTES EN BOIS MULTICOUCHE ET EN FIBRE DE CARBONE

(30) Priority: 30.03.2012 IT BL20120002
(43) Date of publication of application: 04.02.2015
(73) Proprietor: Wolf di Damiano da Rold e Fiorenzo Barp S.N.C., 32100 Belluno BL (IT)
(72) Inventor: DA ROLD, Damiano, I-32100 Belluno BL (IT); Barp, Fiorenzo, I-32100 Belluno BL (IT); Barp, Marco, I-32100 Belluno BL (IT)
(74) Representative: Bonvicini, Davide
(86) International application number: PCT/IB2013/052169
(87) International publication number: WO 2013/144774

(56) References cited:
- EP-A1- 0 002 993
- EP-A2- 0 671 257
- WO-A1-01/70498
- AT-A4- 505 415

## Description

The object of the present innovation is a new method for manufacturing spectacles frames made of multilayer wood and carbon fibre which are suitable for associating the appearance and decoration characteristics of wood with the solidity and the lightness required for the normal use of spectacles.

The main characteristic of the present innovation is that of providing a method for making a frame front and/or temples of spectacles according to the following steps:
a) - an initial step of preparing the various layers of wood and various layers of carbon fibre, having an identical dimension of length and height, therefore that can perfectly overlap one another, such as to be able to contain the entire surface of the frame element to be made;
b) - a second step of joining, with vinyl-type glue, a double pair of sheets or layers of wood that are intended to form both the cover and the back of the frame front and/or of the temple of the spectacles;
c) - a third step of spacing, between the cover and the back of the frame element, some layers or sheets of carbon fibre and layers or sheets of wood, to be joined with one another, as well as to the cover and to the back, by means of epoxy-type glue, so as to form a single rough block of frame front and/or temple;
d) - a fourth step of inserting the rough block between the matrices for example of a press machine and pressing the block such that the desired shape in width, height and depth of the frame front or of the temple is formed;
e) - a fifth step of milling the pressed block so as to obtain the profile and the holes of the lenses, in addition to the side holes for the engagement of the metal hinging elements of the frame front, or to obtain the profile of the temple with its holes for the engagement of the metal hinging elements;
f) - a sixth step of finishing the edges of the frame front and of the temples, with a possible painting thereof;
g) - a last step of applying and fixing the hinging elements to the frame front and to the temples, with a hinged joint thereof, for mounting the frame of the spectacles having the outer and inner surfaces completely or partially made from wood.

With respect to normal metal frames, in acetate or in other plastic materials, a frame of spectacles in wood, or seemingly in wood, offers the wearer a guarantee of exclusivity and distinctive character, for which many people are often willing to pay substantial amounts, even in the case in which the spectacles themselves are not a medical aid. The rarity of this type of wooden frame is also given by the fact that their structure, despite being accurate and treated, is always extremely fragile due to the single direction of its fibres, which do not allow stress and impact in the direction that is transversal with respect to the fibres themselves.

In order to overcome this problem and therefore place on the market spectacles that are at least seemingly in wood but which are provided with greater solidity, some solutions have been proposed that substantially provide composite structures of frame fronts and/or temples of spectacles, in which at least one lamellar part in wood is on the outer and inner surfaces, or only outer, of the same frame elements of the spectacles.

For example, according to the teaching of patent US 4,255,024 - filed on 26.12.1978 - a frame front of spectacles in wood is made by mounting a series of thin layers of wood by means of a suitable glue which softens them and makes them capable of being shaped against a mask copying the profile of the lenses, whereas the temples are also formed by many layers of wood mounted and formed with glue and with the interposition of a metal core. In reality, in addition to being complex and costly in the production phase, this method was, in any case, found to be fragile, in particular for the poor strength of the bridge and of the fixing points of the metal hinging elements between the frame front and temples.

One more recent method provides the three-dimensional notching of the frame front and of the temples from respective blocks of multilayer wood, suitably assembled with suitable saturating resin of the same wood, according to the teaching of patent US 5,537,161 - filed on 15.09.1994. This method was found to be capable of ensuring more solid frame fronts and temples with respect to those of the previous method, but for its three-dimensional notching, it requires having very thick blocks of multi-layered wood, with the consequent formation of great waste and in any case with again poor resistance to impact and stress.

An even more recent solution, provides covering the surface with a layer of wood, by means of suitable saturation resins, at the outer surface of normal frame fronts and/or temples of spectacles for example in acetate, according to the teaching of patent JP 2006235481 - filed on 28.02.2005 - which improves an already known system of applying similar masks in wood by means of screws or through coupling. Even without considering the difficulty of always having the right glue for joining the wooden mask with the type of material of the frame front and/or of the temples, this solution certainly does not seem to be improved, since the visual difference between the structure of the frame and its coating is immediately apparent, at the expense of the visual and aesthetic exclusivity of a spectacle made from wood.

In all these and in other similar solutions of frames that are seemingly made from wood, made according to the state of the art, there is still the problem of inserting and containing the lenses on the frame front that, due to the rigidity of the circles made, often requires the transversal cutting of the containment circles and the consequent application of closing screws, just like the same structure in wood and resin allows a quite precarious fixing of the hinging elements to the ends of the frame front and of the temples to be joined. Moreover, in all the multilayer solutions known to this day, the epoxy-type glue, applied on the layer of wood of the cover and or of the back, tends to transpire and to stain the outer surface of the frame front or of the temples, tarnishing their appearance.

The main task of the present innovation is to be able to make a frame for spectacles, that may be complete or attributed only to its frame front or to its temples, which joins the aesthetic and visual advantage of one aspect of an embodiment in wood, with the advantage of a maximum solidity and resistance to every impact or stress.

In the field of such a task, another important purpose of the present innovation is that of being able to make a frame front and/or temples of a frame for spectacles that highlight and give value to the multi structural nature of its components, making spectacle rims which are equipped with longitudinal lines that are chromatically different from one another.

Another purpose of the innovation is that of being able to make a frame for spectacles which has maximum solidity in the attachment of the hinging elements between the ends of the frame front and of the temples.

A further purpose of the present innovation is that of being able to make a frame for spectacles that associates the maximum resistance to usage stress of the spectacle with its minimal bulk and with its minimal weight.

Again another purpose of the present solution is that of being able to make frames of spectacles of the wood-type, without problems of stains due to the glue of the layers in sight.

The last but not least purpose of the present innovation is that of being able to make a frame for spectacles that requires a minimal waste of material, with the maximum manufacturing simplicity.

These and other purposes can indeed be perfectly achieved with the present solution, which substantially provides a succession of steps for preparing, mounting and milling a series of layers of wood and of carbon fibre, according to the main claim of this patent application and as shall be described and illustrated in greater detail, highlighting the achievement of the specified purposes, for a succession of steps thereof that is proposed in the rest of the description purely as an indication and not for limiting purposes, also with the help of 3 schematic figures shown in the attached table and of which:
- Fig. 1 represents a perspective view of a random number of layers of wood and of carbon fibre ordered according to one of the steps of the method under examination;
- Fig. 2 represents a schematic, partial and cross-section view, of the same series of layers of wood and of carbon fibre as fig. 1, as they are in the mounting step;
- Fig. 3 represents a perspective view of a part of frame front and of temple for a spectacle, made at the end of the various steps of the method under examination.

In all the figures the same elements are represented, or should be considered represented, with the same reference numeral, each thickness of the single layers being shown in a scale that is greater than in reality, for the sake of graphical simplicity.

In accordance with the solution illustrated with said figures, in a first step of the method under examination for making for example a frame front (F) of a model of spectacle (M), for example with a single cutting-die a thin sheet of wood (1) is first made with a thickness of a few tenths of a millimetre, having length (X) and height (Y) that are slightly greater than the width (X') and height (Y') development which are provided for said frame front (F). With the same cutting-die or other cutting device, a second sheet made from wood (2) and identical sheets made from wood (4) - (6) - (8) and (9) are then cut, preferably by arranging the fibres of the wood in a direction that is successively perpendicular. With the same cutting device and in any case in the same format (X - Y), the sheets or layers of carbon fibre (3) - (5) and (7) are also cut. Preferably, the central layer (5) has a thickness that is at least double the thickness of the intermediate layers (3 and 7) and can also be made up of a series of many layers or sheets of carbon fibre.

Once said first preparation step has been completed, in a second step of the same method, the layer (1) is joined to the layer (2), so as to form the cover in wood (C), and the layer (8) to the layer (9), so as to form the back in wood (R), with the interposition of a vinyl-type glue film, which has the propriety of drying rapidly and of not transpiring from the thickness of the outer layer (1) and of the layer (9) of the respective covers (C and R).

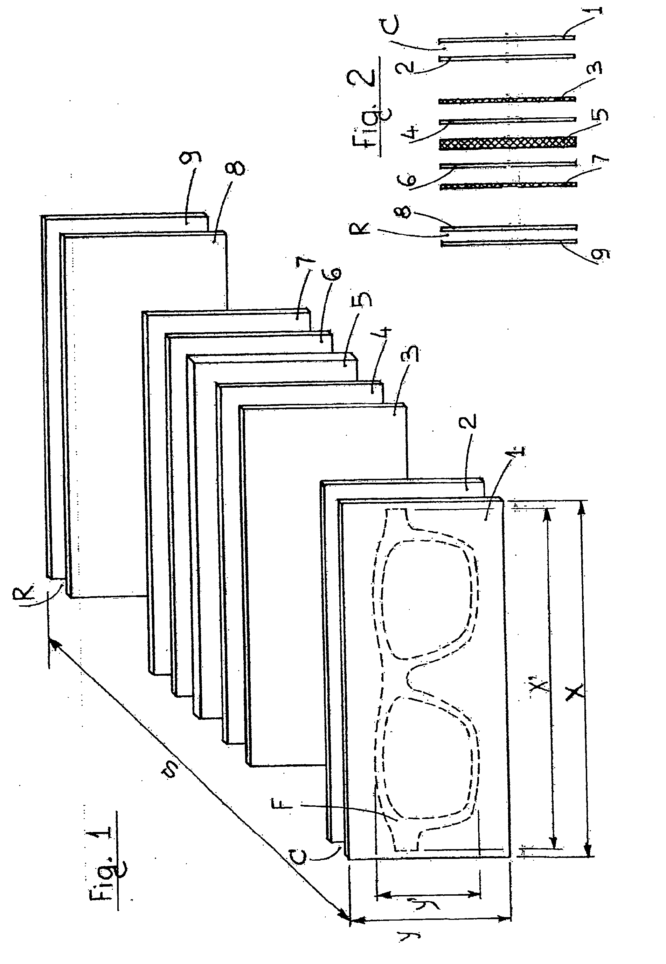

In a third step of the present method, in succession after the cover (C), as illustrated in fig. 2, it is provided to align the layer of fibre (3), the layer of wood (4), the layer of fibre (5), the layer of wood (6), the layer of fibre (7) which will then be aligned with the back (R), putting an epoxy-type glue film between the various layers (2 - 3 - 4 - 5 - 6 - 7 and 8), to form a single block (S) comprising the mentioned nine layers (1 - 2 - 3 - 4 - 5 - 6 - 7 - 8 and 9) and their glues.

The fourth step of the method under examination provides pressing the block (S) between the matrices of a press machine, or another analogous compression device which, according to a method known in the field of multilayer panels, makes it possible to compact its nine layers, giving the block (S) itself minimal thickness and a rounded shape, such as to give a curvature also to its longitudinal sides, at which the end pieces of the frame front (F) will be made. In accordance with the same method relating to the formation of multilayer panels, the pressing of the block (S) can be indicatively carried out at a temperature of around 30 - 80 °C and for indicatively a couple of hours, also in relation to the drying characteristics of the epoxy-type glue used for joining the various intermediate layers to the cover (C) and to the back (R).

Of course, the shape of the frame front (F) model (M) to be made is advantageously saved in a numerical control machine tool, on which the pressed block (S) is arranged and fixed along the sides (X - Y), so as to be able to mill the profile and the holes for containing the lenses, with the chamfering (B) thereof, in addition to the side holes for the engagement of the metal elements (D1 - D2) for hinging the frame front, according to a fifth step of the method under examination.

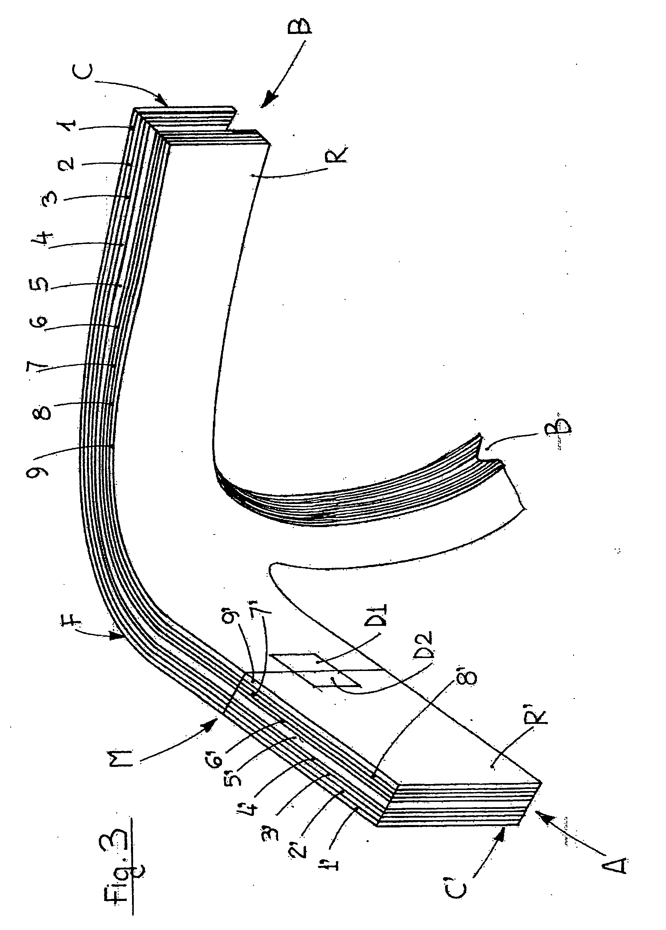

With reference to fig. 3, as already mentioned, a portion of frame front (F) of spectacles is shown, made according to the innovative method illustrated to this point, from which portion the lines on its upper edge can be in any case seen, proving the presence of a series of three intermediate layers in carbon fibre (3 - 5 - 7), spaced apart by two intermediate wood layers (4 - 6), by a cover (C) that is formed by two layers in wood (1 - 2), and by a back (R) that is formed by two layers in wood (8 - 9).

From the same fig. 3 it can be understood that the frame front (F) of the frame (M) is associated with a temple (A) which, in the illustrated solution, is also made up by an identical series of three intermediate layers in carbon fibre (3' 5' - 7'), spaced apart by two intermediate layers of wood (4' - 6'), by a cover (C') that is formed by two layers of wood (1' -2') and by a back (R') that is formed by two layers of wood (8' - 9'). This means that also the temple (A) is made with the exact same method illustrated to this point for making the frame front (F), of course, making a block (S) thereof having dimensions (X - Y) that are sufficient for containing the length (X') and height (Y'), not represented, of the same finished temple (A).

Also the temple (A), in the milling step of its printed block (S), must be machined at the end, so as to be able to house and fix the hinging element (D2) to be associated with the hinging element (D1) of the frame front (F).

According to the present method for manufacturing spectacles frames made of multilayer wood and carbon fibre, after printing and manufacturing, for example with milling of the edges of the frame front (F) and of a pair of temples (A), it is provided for there to be a further step for finishing the edges themselves, with a possible painting of the frame thus obtained, and a final step of applying and fixing the respective hinging elements (D1 - D2), inside the respective seats of the frame front (F) and of the temple (A), preferably after that the elements (D1 - D2) themselves have already pre-emptively been joined to one another, by means of a suitable pin, according to a method already known.

Based upon what has been described and illustrated up to now as an example, it is clear that the spectacle that can be made with the present method makes it possible to obtain a frame of the spectacles (M), or only its frame front (F) or only its temples (A), which have the appearance of a spectacle made from wood, with the clear advantages of personalization and of exclusivity of this aspect, whilst ensuring maximum solidity and resistance to any type of impact or stress, in accordance to the main purpose proposed.

With reference to fig. 3, it is then obvious that the constructive solution illustrated above makes it possible to make a spectacle that has its profile or outline that is equipped with longitudinal lines which give a further advantage in terms of its appearance, in accordance with another one of the purposes specified. The same spectacle, made with the method under examination, associates the lightness of wood and of carbon fibre with the high resistance of the fibre itself, making it possible to make frames that are extremely light and that have minimal bulk, despite being solid and sufficiently elastic for the direct insertion of the lenses, in accordance with other specified purposes.

The provision of forming a cover (C) and a back (R), which are made up of a double layer of wood (1 - 2) and (8 - 9), joined to one another by a vinyl-type glue film, therefore that can dry rapidly and that is impermeable, makes it then possible to associate the other layers of fibre (3 - 5 - 7) and of wood (4 - 6) to one another and with the cover (C) and the back (R) without their epoxy-type glue, being able to transpire on the cover and on the back, eliminating the problem of becoming stained, in accordance with another one of the purposes specified.

Of course, the method described and illustrated so far can also be made in other shapes and with a consequent adaptation of its manufacturing steps. As an example, we shall indicate the possibility of making a frame front (F) and/or its temples (A) with a different number of pieces or sheets of carbon fibre and with a different number of intermediate pieces or sheets of wood, just like it is possible to provide making covers (C) and/or backs (R) having fibres that are in a vertical direction or that are perpendicular to one another.

It is moreover possible to provide the application of hinges (D1 - D2) to be externally fixed to the back (R) of the frame front (F) and of the temple (A), just like it is possible to provide the application of hooks for supporting the nose pads, again exploiting the holding capability in particular of the intermediate portion (5) in carbon fibre.

## Claims

1. A method for manufacturing spectacles frames made of multilayer wood and carbon fibre, which are suitable for associating the appearance and decoration characteristics of wood with the solidity and the lightness required for the normal use of spectacles, **characterised in that** it provides making a frame front and/or temples of spectacles according to the following steps:
a) an initial step of preparing various layers or sheets of wood and various layers or sheets in carbon fibre, having identical length and height dimensions, therefore being perfectly able to overlap one another, such as to be able to contain the development of the entire surface of the frame element to be made;
b) a second step of joining, with vinyl-type glue, a pair of layers of wood that are intended to form the cover and a pair of layers of wood that are intended to form the back of the frame front or of the temple of the spectacles;
c) a third step for spacing, between the cover and the back of the frame element, a series of layers of carbon fibre and layers of wood, to be joined to one another, as well as to the cover and the back by means of epoxy-type glue, so as to form a single rough block of frame front and/or temple;
d) a fourth step of inserting the rough block between the matrices of a press machine and pressing the block such that the desired shape in width, in height and in depth of the frame front or of the temple is formed;
e) a fifth step of milling the pressed block so as to obtain the profile and the holes of the lenses, in addition to the side holes for the engagement of the metal hinging elements of the frame front, or to obtain the profile of the temple with its holes for the engagement of the metal hinging elements;
f) a sixth step of finishing the edges of the frame front and the temples of the spectacle, with a possible painting thereof;
g) a last step of applying and fixing the hinging elements, such as to finish the frame of the spectacles;

2. The method for manufacturing spectacles frames made of multilayer wood and carbon fibre according to claim 1, **characterised in that**, in order to make one frame model of the spectacles (M) or of its frame front (F) or of the temple (A), a series of thin layers of wood (1 - 2 - 4 - 6 - 8 and 9) and a series of layers of carbon fibre (3 - 5 - 7) are first made, all having identical width (X) and identical height (Y) which is slightly greater than the development of the width (X') and of the height (Y') which are provided for said model of frame (M), of frame front (F) or temple (A);

3. The method for manufacturing spectacles frames made of multilayer wood and carbon fibre according to claim 2, **characterised in that** the central layer of fibre (5) is made with a greater thickness, with respect to the thickness of the intermediate layers of fibre (3 and 7);

4. The method for manufacturing spectacles frames made of multilayer wood and carbon fibre according to claims 1 and 2, **characterised in that** one layer of wood (1) is joined to a layer of wood (2) by interposition of a vinyl-type glue film, forming a cover (C), just as a layer in wood (8) is joined to a layer in wood (9) by interposition of a vinyl-type glue film, forming the back (R) of the frame front (F) or of the temple (A) of a frame (M);

5. The method for manufacturing spectacles frames made of multilayer wood and carbon fibre according to claims 1 and 2, **characterised in that** between a cover (C) and a back (R) said method proceeds to align one layer of fibre (3) with a layer of wood (4), one layer of fibre (5), with the layer of wood (6), then one layer of fibre (7) which will thus be aligned with the back (R), placing an epoxy-type glue film between the various layers (2 - 3 - 4 - 5 - 6 - 7 and 8), to form a single block (S) comprising the mentioned nine layers (1 - 2 - 3 - 4 - 5 - 6 - 7 - 8 and 9) and their glue;

6. The method for manufacturing spectacles frames made of multilayer wood and carbon fibre according to claim 5, **characterised in that** the block (S) is pressed, for a time and temperature in accordance with the normal method for forming multilayer wooden panels, giving said block (S) a minimal thickness and a rounded shape, such as to make also its longitudinal sides curved, at which the end pieces of the frame front (F) of the frame (M) will be made;

7. The method for manufacturing spectacles frames made of multilayer wood and carbon fibre according to claims 1 to 6, **characterised in that** the pressed block (S) is arranged and fixed along the sides (X - Y) to a machine tool so as to be able to mill the profile and the holes for containing the lenses, with the chamfering (B) of the frame front (F) or the profile and the holes of the temples (A), in addition to the holes for coupling and fixing their metal hinging elements;

8. The method for manufacturing spectacles frames made of multilayer wood and carbon fibre according to claims 1 to 7, **characterised in that** a further step for finishing the edges themselves is provided, with a possible painting of the frame thus obtained, and a final step of applying and fixing the respective hinging elements (D1 - D2), inside the respective seats of the frame front (F) and temple (A).

## Patentansprüche

1. Verfahren zur Anfertigung von Brillengestellen aus Mehrschichtholz und Kohlenstofffaser, die geeignet sind, das Aussehen und die Gestaltungsmerkmale von Holz mit der Robustheit und Leichtigkeit zu verbinden, die für den normalen Gebrauch von Brillen erforderlich sind, **dadurch gekennzeichnet, dass** das Herstellen eines Vorderteils und/oder der Brillenbügel gemäß der folgenden Schritte erfolgt:
a) einen ersten Schritt des Vorbereitens mehrerer Schichten oder Furniere aus Holz und mehrerer Schichten oder Lagen aus Kohlenstofffaser, die die gleichen Längen- und Höhenmaße aufweisen und folglich in der Lage sind, sich derart zu überlappen, dass sie die Abwicklung der gesamten Oberfläche des herzustellenden Gestellelements aufnehmen können;
b) einen zweiten Schritt des Verbindens eines Paares von Holzschichten mit Vinylkleber, die die Oberseite bilden, und eines Paares von Holzschichten, die die Rückseite des Vorderteils oder der Bügel der Brille bilden;
c) einen dritten Schritt des Beabstandens zwischen die Oberseite und der Rückseite des Gestellelements einer Reihe von Kohlenstofffaserschichten und Holzschichten, die sowohl miteinander als auch mit der Oberseite und der Rückseite mittels Epoxykleber zu verbinden sind, um einen Einzelrohblock des Vorderteils und/oder Bügels zu bilden;
d) einen vierten Schritt des Einsetzens des Rohblocks zwischen die Matrizen einer Maschinenpresse und des Pressens des Blocks, so dass die gewünschte Form bezüglich Breite, Höhe und Tiefe des Vorderteils oder des Bügels gebildet wird;
e) einen fünften Schritt des Fräsens des gepressten Blocks, um das Profil und die Löcher für die Brillengläser zusätzlich zu den seitlichen Löchern für das Eingreifen der Metallscharnierelemente des Vorderteils zu erhalten oder um das Profil des Bügels mit seinen Löchern für das Eingreifen der Metallscharnierelemente zu erhalten;
f) einen sechsten Schritt des Endbearbeitens der Kanten des Vorderteils und der Bügel der Brille, samt eventuellem Bemalen derselben;
g) einen letzten Schritt des Anbringens und Befestigens der Scharnierelemente, um das Brillengestell fertigzustellen.

2. Verfahren zur Anfertigung von Brillengestellen aus Mehrschichtholz und Kohlenstofffaser nach Anspruch 1, **dadurch gekennzeichnet, dass** zur Herstellung eines Modells der Brille (M) oder ihres Vorderteils (F) oder des Bügels (A) zuerst eine Reihe von dünnen Holzschichten ( 1 - 2 - 4 - 6 - 8 und 9) und eine Reihe von Kohlenstofffaserschichten (3 - 5 - 7) hergestellt werden, die allesamt dieselbe Breite (X), und dieselbe Höhe (Y) haben, die etwas größer als die Abwicklung der Breite (X') und der Höhe (Y') sind, die für das Modell des Gestells (M), des Vorderteils (F) oder des Bügels (A) vorgesehen sind.

3. Verfahren zur Anfertigung von Brillengestellen aus Mehrschichtholz und Kohlenstofffaser nach Anspruch 2, **dadurch gekennzeichnet, dass** die Dicke der mittigen Faserschicht (5) größer als die Dicke der Faserzwischenschichten (3 und 7) ist.

4. Verfahren zur Anfertigung von Brillengestellen aus Mehrschichtholz und Kohlenstofffaser nach Anspruch 1 und 2, **dadurch gekennzeichnet, dass** eine Holzschicht (1) mit einer Holzschicht (2) durch Einfügen eines Vinylkleberfilms verbunden wird, der die Oberseite (C) bildet, ebenso wie eine Holzschicht (8) mit einer Holzschicht (9) durch Einfügen eines Vinylkleberfilms verbunden wird, der die Rückseite (R) des Vorderteils (F) oder des Bügels (A) eines Gestells (M) bildet.

5. Verfahren zur Anfertigung von Brillengestellen aus Mehrschichtholz und Kohlenstofffaser nach Anspruch 1 und 2, **dadurch gekennzeichnet, dass** zwischen eine Oberseite (C) und eine Rückseite (R) das Verfahren fortgesetzt wird, um eine Faserschicht (3) auf eine Holzschicht (4), eine Faserschicht (5) auf eine Holzschicht (6) und anschließend eine Faserschicht (7) auszurichten, die somit auf die Rückseite (R) ausgerichtet ist, wobei ein Epoxykleberfilm zwischen die einzelnen Schichten (2 3 4 5 6 7 und 8) aufgetragen wird, um einen Einzelblock (S) zu bilden, der die genannten neun Schichten (1 2 3 4 5 6 7 8 und 9) und deren Klebstoff umfasst.

6. Verfahren zur Anfertigung von Brillengestellen aus Mehrschichtholz und Kohlenstofffaser nach Anspruch 5, **dadurch gekennzeichnet, dass** der Block (S) über einen Zeitraum und bei einer Temperatur entsprechend dem üblichen Verfahren zum Bilden von Mehrschichtholzplatten gepresst wird, wobei dem Block (S) eine minimale Dicke und eine abgerundete Form verliehen wird, so dass auch seine Längsseiten gebogen sind, an denen die Endteile des Vorderteils (F) des Gestells (M) hergestellt werden.

7. Verfahren zur Anfertigung von Brillengestellen aus Mehrschichtholz und Kohlenstofffaser nach den Ansprüchen 1 bis 6, **dadurch gekennzeichnet, dass** der gepresste Block (S) längs der Seiten (X - Y) in einer Werkzeugmaschine angeordnet und befestigt wird, damit das Profil und die Löcher zur Aufnahme der Brillengläser unter Anfasen (B) des Vorderteils (F) oder das Profil und die Löcher für die Bügel (A) zusätzlich zu den Löchern zum Verbinden und Befestigen ihrer Metallscharnierelemente gefräst werden können.

8. Verfahren zur Anfertigung von Brillengestellen aus Mehrschichtholz und Kohlenstofffaser nach den Ansprüchen 1 bis 7, **dadurch gekennzeichnet, dass** ein weiterer Schritt zum Endbearbeiten der Kanten selbst, samt eines eventuellen Bemalens des so erhaltenen Gestells, und ein abschließender Schritt des Anbringens und Befestigens der jeweiligen Scharnierelemente (D1 - D2) in den jeweiligen Sitzen des Vorderteils (F) und des Bügels (A) vorgesehen sind.

## Revendications

1. Procédé de fabrication de montures de lunettes réalisées en fibres de carbone et de bois multicouches, qui sont adaptées pour associer des caractéristiques d'aspect et de décoration du bois avec la solidité et la légèreté nécessaires pour l'utilisation normale de lunettes, **caractérisé en ce qu'**il prévoit la réalisation d'une monture avant et/ou de branches de lunettes selon les étapes suivantes :
a) une étape initiale de préparation de diverses couches ou feuilles en bois et diverses couches ou feuilles en fibres de carbone, ayant des dimensions identiques en longueur et en hauteur, étant par conséquent parfaitement adaptées pour se superposer l'une à l'autre, de manière à contenir le développement de toute la surface de l'élément de monture à réaliser ;
b) une deuxième étape d'union, avec une colle de type vinyle, une paire de couches de bois qui sont destinées à former la couverture et une paire de couches de bois qui sont destinées à former le dos de la monture avant ou des branches des lunettes ;
c) une troisième étape pour intercaler, entre la couverture et le dos de l'élément de monture, une série de couches de fibres de carbone et des couches de bois, à unir entre elles, ainsi qu'à la couverture et au dos au moyen de colle de type époxy, de manière à former un unique bloc brut de monture avant et/ou branche ;
d) une quatrième étape d'insertion du bloc brut entre les matrices d'une presse et de pressage du bloc de manière que la forme désirée, en largeur, en hauteur et en profondeur, de la monture avant ou de la branche soit crée ;
e) une cinquième étape de fraisage du bloc pressé de manière à obtenir le profil et les trous des verres, en plus des trous latéraux pour l'engagement des éléments métalliques de charnière de la monture avant ou pour obtenir le profil de la branche avec ses trous pour l'engagement des éléments métalliques de charnière ;
f) une sixième étape de finition des bords de la monture avant et des branches des lunettes, avec leur éventuelle peinture ;
g) une dernière étape d'application et de fixation des éléments de charnière, de manière à finir la monture des lunettes.

2. Procédé de fabrication de montures de lunettes réalisées en fibres de carbone et de bois multicouches selon la revendication 1, **caractérisé en ce que**, de manière à réaliser un modèle de monture des lunettes (M) ou de sa monture avant (F) ou de la branche (A), une série de minces couches de bois (1 - 2 - 4 - 6 - 8 et 9) et une série de couches de fibres de carbone (3 - 5 - 7) sont d'abord réalisées, ayant toutes une largeur identique (X) et une hauteur identique (Y) qui est légèrement supérieure au développement de la largeur (X') et de la hauteur (Y') qui sont prévues pour ledit modèle de monture (M), de monture avant (F) ou de branche (A).

3. Procédé de fabrication de montures de lunettes réalisées en fibres de carbone et de bois multicouches selon la revendication 2, **caractérisé en ce que** la couche centrale de fibres (5) est réalisée avec une épaisseur supérieure, par rapport à l'épaisseur des couches de fibres intermédiaires (3 et 7).

4. Procédé de fabrication de montures de lunettes réalisées en fibres de carbone et de bois multicouches selon les revendications 1 et 2, **caractérisé en ce qu'**une couche de bois (1) est unie à une couche de bois (2) par interposition d'un film de colle de type vinyle, en formant une couverture (C), tout comme une couche de bois (8) est unie à une couche de bois (9) par interposition d'un film de colle de type vinyle, en formant le dos (R) de la monture avant (F) ou de la branche (A) d'une monture (M).

5. Procédé de fabrication de montures de lunettes réalisées en fibres de carbone et de bois multicouches selon les revendications 1 et 2, **caractérisé en ce que**, entre une couverture (C) et un dos (R), ledit procédé prévoit d'aligner une couche de fibres (3) avec une couche de bois (4), une couche de fibre (5), avec la couche de bois (6), puis une couche de fibre (7) qui sera ainsi alignée avec le dos (R), en plaçant un film de colle de type époxy entre les différentes couches (2 - 3 - 4 - 5 - 6 - 7 et 8), pour former un unique bloc (S) comprenant les neuf couches mentionnées (1 - 2 - 3 - 4 - 5 - 6 - 7 - 8 et 9) et leur colle.

6. Procédé de fabrication de montures de lunettes réalisées en fibres de carbone et de bois multicouches selon la revendication 5, **caractérisé en ce que** le bloc (S) est pressé, pendant un temps et à une température conformément au procédé normal pour la formation de panneaux en bois multicouches, en donnant audit bloc (S) une épaisseur minimale et une forme arrondie, de manière à rendre également ses côtés longitudinaux courbes, au niveau desquels les pièces d'extrémité de la monture avant (F) de la monture (M) seront réalisées.

7. Procédé de fabrication de montures de lunettes réalisées en fibres de carbone et de bois multicouches selon les revendications 1 à 6, **caractérisé en ce que** le bloc pressé (S) est agencé et fixé le long des côtés (X - Y) à une machine-outil de manière à pouvoir fraiser le profil et les trous pour contenir les verres, avec le chanfrein (B) de la monture avant (F) ou le profil et les trous des branches (A), en plus des trous pour l'accouplement et la fixation de leurs éléments métalliques de charnière.

8. Procédé de fabrication de montures de lunettes réalisées en fibres de carbone et de bois multicouches selon les revendications 1 à 7, **caractérisé en ce qu'**il est prévu une autre étape pour la finition des bords eux-mêmes, avec une éventuelle peinture de la monture ainsi obtenue, et une étape finale d'application et de fixation des éléments de charnière (D1 - D2) respectifs, à l'intérieur des sièges respectifs de la monture avant (F) et de la branche (A).
